# EUROPEAN PATENT APPLICATION

(11) **EP 3 006 695 A1**
(43) Date of publication of application: **13.04.2016**
(21) Application number: 13885617.4
(22) Date of filing: 31.05.2013
(51) Int. Cl.: F02B 45/06, F02K 99/00, F03G 7/00, F03H 99/00

(54) **PLANT FOR GENERATING ELECTRICAL ENERGY BY CONTROLLED EXPLOSION**

(30) Priority: 27.05.2013 ES 201330772
(71) Applicant: De Paz Ucedo, Benito, 28025 Madrid (ES)
(72) Inventor: De Paz Ucedo, Benito, 28025 Madrid (ES)
(74) Representative: Lahidalga de Careaga, Jose Luis
(86) International application number: PCT/ES2013/070353
(87) International publication number: WO 2014/191588

(57) **Abstract**

A controlled-explosion electrical power generating station which uses explosives as the component to create the power to drive the energy electrical generators, said generating station comprising at least a fuel storage silo, a zone for setting the explosives, a cooled zone, a dome to protect the reactor, an explosion zone and a generator suitable for operation by explosives.

## Description

### OBJECT OF THE INVENTION

The invention proposed refers to a controlled-explosion electrical power generating station which uses explosives as the component to create the power to drive the electrical energy generators.

### FIELD OF THE INVENTION

The field of the invention refers both to the manufacturers of explosives and to the makers of the elements habitual in an electrical power generating station.

### BACKGROUND TO THE INVENTION

There are antecedents which refer to different types of fuels used to drive electrical power generating turbines, but none similar to that using the system described in these specifications.

The inventor is unaware of any predecessor that incorporates the design of this invention or the advantages implicit in said design.

### DESCRIPTION OF THE INVENTION

The invention proposed refers to a controlled-explosion electrical power generating station which uses explosives as the component to create the power to drive the electrical energy generators, said generating station comprising mainly the following:
A storage silo, for storage of the explosives to be used. Said explosives will comprise various components, depending on the type of generator to be fed, the geographical zone, the resources available in the zone, and the power requirements.

A transport zone. This is the zone where the explosives are moved from the storage silo to the zone where they will be set: the type of transport depends on the type of explosive to be used, and may be air-operated, a mechanical conveyor belt or any other which is adequate.

There will also be a setting zone, where the explosives to be used are made ready to explode, as the silo they have come from must, for reasons of security, be as inert as possible to prevent an uncontrolled explosion.

Setting depends on the type of explosive to be used and may involve chemical detonators, timers, or any other that is appropriate for the explosive to be used.

A cooled zone. To be able to handle the explosives with a greater margin of security, provision has been made for a cooled zone taking in the setting zone and the zone for entry to the explosion zone.

Transport for entry to the explosion zone. The transport resources must here be high-precision because this involves the handling of explosives which are set and ready to fire, and they may be air-operated or mechanical conveyor belts.

Generator protection dome. To protect the whole assembly, there will be reinforced concrete dome over the zone of the explosion and the generator.

Explosion zone. This is the zone where the explosive is detonated and where the heat and the shockwave are created to drive the generator.

A generator, suitably prepared to use the shockwave and heat to drive it.

### DESCRIPTION OF THE DRAWINGS

For a better understanding of the invention, a page of plans is attached, showing the following:
FIGURE 1.-
   A diagrammatic view of the most important parts of an electrical power generating station which uses the resources in this invention.
   And in that figure, a single reference is used to identify identical elements, among which the following can be made out:
   (A).- storage silo
   (B).- transport zone
   (C).- setting zone
   (D).- cooled zone
   (F).- means of transport
   (G).- generator protective dome
   (H).- explosion zone
   (I).- generator

### A PREFERENTIAL EMBODIMENT OF THE INVENTION.

This invention refers to a controlled-explosion electrical power generating station which uses explosives as the component to create the power to drive the energy electrical generators, and where said generating station comprises at least the following main elements.
(A).- A storage silo, the place where the explosives to be used are stored. Said explosives will comprise various components, depending on the type of generator to be supplied, the geographical zone, the resources available in the zone, and the power requirements.
(B).- A transport zone. This is the zone where the explosives are moved from the storage silo to the zone where they will be set.
   The type of transport depends on the type of explosive to be used, and may be air-operated, a mechanical conveyor belt or any other which is adequate.
(C).- Setting zone, where the explosives to be used are made ready to explode, as the silo they have come from must, for reasons of security, be as inert as possible to prevent an uncontrolled explosion.
   Setting depends on the type of explosive to be used and may involve chemical detonators, timers, or any other appropriate for the explosive to be used.
(D).- A cooled zone. To be able to handle the explosives with a greater margin of security, provision has been made for a cooled zone taking in the setting zone (C) and the zone for entry to the explosion zone (F).
(F).- Transport for entry to the explosion zone. The transport resources must here be high-precision because this involves the handling of explosives which are set and ready to fire, and they may be air-operated or mechanical conveyor belts.
(G).- Generator protection dome. To protect the whole assembly, there will be reinforced concrete dome over the zone of the explosion and the generator.
(H).- Explosion zone. This is the zone where the explosive is detonated and where the heat and the shockwave are generated to drive the generator.
(I).- A generator, suitably prepared to use the shockwave and heat to drive it.

Having sufficiently described the nature of the invention and its practical implementation, it must be recorded that the specifications indicated above and represented in the attached drawings may be modified in detail provided that this does not alter their fundamental principles established in the previous paragraphs and summarised in the following claims.

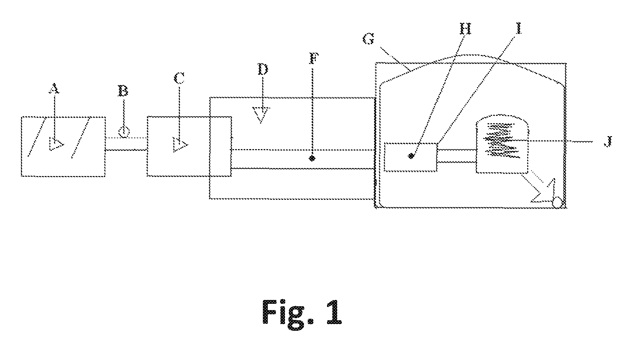

## Claims

1. A controlled-explosion electrical power generating station which uses explosives as the component to create the power to drive the energy electrical generators, said generating station comprising at least the following main elements:
(A).- A storage silo, the place where the explosives to be used are stored.
(B).- A transport zone, where the explosives are moved from the storage silo to the zone where they will be set.
(C).- Setting zone, where the explosives to be used are made ready to explode.
(D).- A cooled zone. To be able to handle the explosives with a greater margin of security, provision has been made for a cooled zone taking in the setting zone (C) and the zone for entry to the explosion zone (F).
(F).- Transport for entry to the explosion zone.
(G).- Generator protection dome. To protect the whole assembly, there will be reinforced concrete dome over the zone of the explosion and the generator.
(H).- Explosion zone. This is the zone where the explosive is detonated and where the heat and the shockwave are created to drive the generator.
(I).- A generator, suitably prepared to use the shockwave and heat to drive it.
